# FASCICULE DE BREVET EUROPEEN

(11) **EP 2 549 138 B1**
(45) Date de publication et mention de la délivrance du brevet: **22.11.2017**
(21) Numéro de dépôt: 12170154.4
(22) Date de dépôt: 31.05.2012
(51) Int. Cl.: F16D 13/38, F16D 13/32, F16D 13/69

(54) **Embrayage bi-disque à élément d'appui embouti**
Doppelscheibenkupplung mit gestanztem Auflageelement
Double-disc clutch with stamped bearing element

(30) Priorité: 22.07.2011 FR 1156671
(43) Date de publication de la demande: 23.01.2013
(73) Titulaire: Valeo Embrayages, 80009 Amiens Cedex 2 (FR)
(72) Inventeur: Brabander, Xavier, 80450 Camon (FR); Dutier, Graziella, 80260 Rainneville (FR)
(74) Mandataire: Cardon, Nicolas

(56) Documents cités:
- WO-A1-03/081065
- FR-A1- 2 526 901
- FR-A1- 2 554 535
- FR-A1- 2 585 098
- FR-A1- 2 612 269
- FR-A1- 2 682 439
- FR-A1- 2 822 509

## Description

L'invention concerne un embrayage bi-disque de véhicule automobile.

L'invention concerne plus particulièrement un embrayage bi-disque de véhicule automobile, comportant un volant d'inertie destiné à être entraîné par un vilebrequin d'un moteur de véhicule automobile, sur lequel est fixé un couvercle d'embrayage à l'intérieur duquel est agencé un moyeu cannelé qui est destiné à recevoir un arbre d'une boîte de vitesses et sur lequel sont montés coulissants et solidaires en rotation deux disques de friction d'embrayage,
un premier disque d'embrayage étant interposé entre le volant d'inertie et un plateau intermédiaire qui est monté coulissant par rapport au couvercle et solidaire en rotation dudit couvercle,
un second disque d'embrayage étant interposé entre le plateau intermédiaire et un plateau de pression qui est monté coulissant par rapport au couvercle et solidaire en rotation dudit couvercle,
un diaphragme d'embrayage, qui prend appui contre le couvercle, sollicitant axialement le plateau de pression en direction du volant d'inertie,
au moins un levier, qui s'étend tangentiellement au plateau de pression, étant articulé à ses extrémités entre ledit plateau de pression et le couvercle,
au moins un élément d'appui ou toucheau, fixé à la périphérie du plateau intermédiaire, étant en appui sur le levier entre ses articulations pour que la levée du plateau intermédiaire corresponde à au moins une partie de la levée du plateau principal afin de garantir la libération des disques de friction,
ledit élément d'appui ou toucheau comporte au moins une première paroi pour sa fixation sur le plateau intermédiaire et une seconde paroi comportant au moins un bossage présentant la forme d'une équerre dont une première branche est destinée à entrer en contact sensiblement ponctuel avec le levier.

On connaît de nombreux embrayages de ce type. Le document FR2585098 divulgue par exemple un embrayage bi-disque tel que définit dans l'introduction des revendications 1, 10 ou 11. Dans un tel embrayage, l'élément d'appui est généralement réalisé par un procédé de fonderie, ce qui en fait une pièce onéreuse et dont les cotes sont difficilement maîtrisables. L'élément d'appui présente une forme en T et une épaisseur importante de l'ordre de 6 mm. La forme de cette pièce ainsi que son épaisseur importante permettent d'obtenir la rigidité nécessaire pour réaliser correctement la fonction de répartiteur de levée. Toutefois, ces caractéristiques rendent la fabrication des éléments d'appui selon l'art antérieur incompatible avec un procédé d'emboutissage.

L'invention remédie à cet inconvénient en proposant un élément d'appui ou toucheau réalisé par emboutissage.

Dans ce but, l'invention propose un embrayage du type décrit précédemment, tel que définit dans les revendications 1, 10 et 11.

Selon les caractéristiques de l'invention :
- l'élément d'appui ou toucheau présente la forme d'un tronçon tubulaire cylindrique comportant une paroi transversale d'extrémité fermant ledit tronçon, ladite paroi transversale comportant un perçage pour constituer la première paroi de fixation sur une face transversale du plateau intermédiaire, et la périphérie du tronçon constituant la seconde paroi,
- l'élément d'appui présente la forme d'une barrette plane repliée sur elle-même en son milieu de manière à comporter deux tronçons plans de barrette parallèles dont au moins un comporte un perçage et constitue la première paroi de fixation sur une périphérie du plateau intermédiaire, et au moins un tronçon incurvé joignant les deux tronçons plans, constituant la seconde paroi,
- l'élément d'appui présente la forme d'une équerre dont au moins une première branche formant la première paroi comporte un perçage pour sa fixation sur le plateau intermédiaire, et dont une seconde branche comportant au moins un bossage, de section perpendiculaire à la direction générale de ladite première branche, forme la seconde paroi,
et selon d'autres aspects de l'invention :
- l'élément d'appui comporte au moins un moyen de rigidification embouti destiné à garantir la position relative des branches de l'équerre,
   - l'élément d'appui comporte une unique première branche et une seconde branche et le moyen de rigidification comporte une nervure en forme de gouttière qui s'étend de manière continue sur au moins une partie de la première branche et sur au moins une partie de la seconde branche dans la direction générale desdites branches selon une largeur correspondant à une partie de la largeur des branches,
   - la convexité de la nervure en forme de gouttière est tournée du coté de l'angle rentrant formé par les deux branches, et la partie de la nervure en forme de gouttière formée dans la seconde branche constitue le bossage,
   - la seconde branche est emboutie suivant toute sa largeur selon la forme d'une gouttière de convexité tournée du coté de l'angle rentrant formé par les première(s) et seconde branches,
   - l'élément d'appui comporte des moyens de rigidification comportant de part et d'autre de la seconde branche deux voiles latéraux qui s'étendent entre la seconde branche et au moins une première branche,
   - l'élément d'appui présente la forme d'une équerre comportant :
      - deux premières branches formant la première paroi comportant chacune un perçage pour sa fixation sur le plateau intermédiaire,
      - une seconde branche agencée entre les deux premières branches, dont le bossage forme la seconde paroi,
   et il comporte deux voiles latéraux dont chacun s'étend entre un bord de la seconde branche et un bord correspondant d'une des première branches, sensiblement perpendiculairement à chaque branche,
   - l'élément d'appui présente la forme d'une équerre comportant une unique première branche formant la première paroi comportant un perçage pour sa fixation sur le plateau intermédiaire et une seconde branche dont le bossage forme la seconde paroi et le moyen de rigidification comporte de part et d'autre de l'équerre deux voiles latéraux qui s'étendent entre les deux branches, à partir des bords de chaque branche, et sensiblement perpendiculairement au plan de chaque branche, Ainsi, il est possible d'obtenir un élément d'appui présentant une rigidité suffisante malgré l'utilisation d'un procédé d'emboutissage nécessitant l'utilisation d'une tôle mince et peu rigide ;
   - la gouttière de la deuxième branche est agencée dans la continuité des deux voiles opposés,
   - chaque perçage est oblong,
   - la tôle utilisée est une tôle d'emboutissage à fort taux d'allongement,
   - la tôle de l'élément d'appui subit un traitement de durcissement superficiel, notamment de carbonitruration ou cémentation après son emboutissage.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe d'un embrayage bi-disques ;
- la figure 2 est une vue d'ensemble en perspective d'un embrayage bi-disques selon l'invention ;
- la figure 3 est une vue latérale de détail de l'embrayage de la figure 2 ;
- la figure 4 est une vue en perspective d'un premier mode de réalisation d'un élément d'appui ou toucheau selon l'invention ;
- la figure 5 est une vue de côté de l'élément d'appui ou toucheau de la figure 4 ;
- la figure 6 est une vue en perspective d'un deuxième mode de réalisation d'un élément d'appui selon l'invention ;
- les figures 7 et 8 sont des vues en perspective et de face d'un quatrième mode de réalisation d'un élément d'appui selon l'invention ;
- les figures 9 et 10 sont des vues en perspective et de face d'un troisième mode de réalisation d'un élément d'appui selon l'invention ;
- les figures 11 et 12 sont des vues en perspective et de face d'un cinquième mode de réalisation d'un élément d'appui selon l'invention.

Dans la description qui va suivre, des chiffres de référence identiques désignent des pièces identiques ou ayant des fonctions similaires.

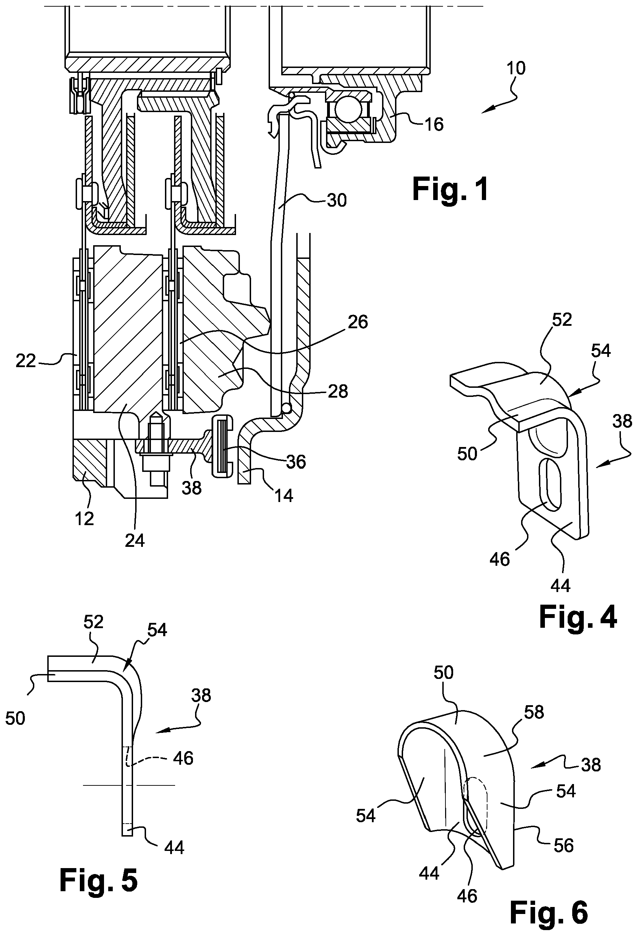

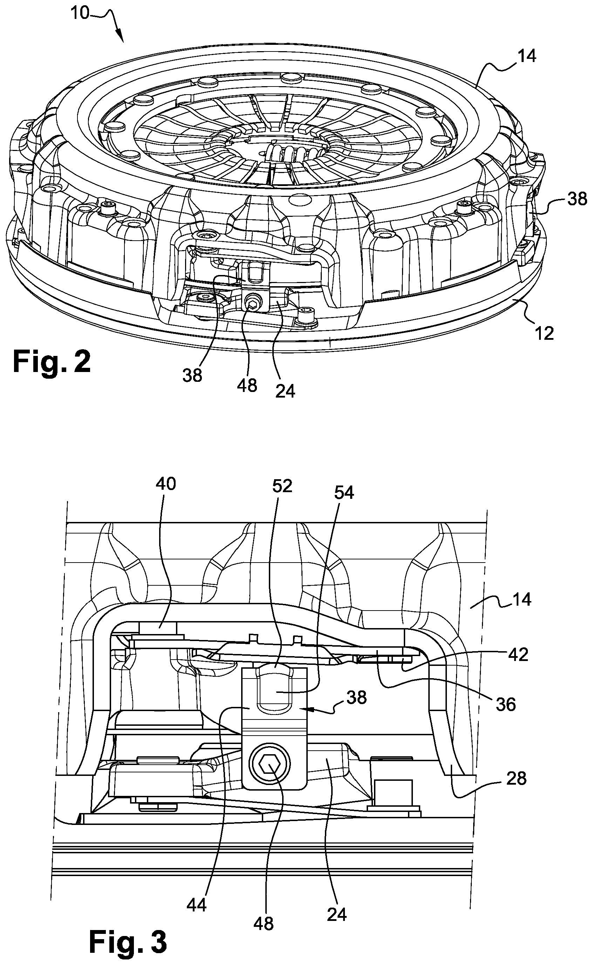

On a représenté sur les figures 1 et 2 un embrayage 10 bi-disques de véhicule automobile.

De manière connue, comme l'illustre la figure 1, l'embrayage 10 comporte un volant d'inertie 12 destiné à être entraîné par un vilebrequin (non représenté) d'un moteur de véhicule automobile.

Sur ce volant d'inertie 12 est fixé un couvercle d'embrayage 14 à l'intérieur duquel est agencé un moyeu cannelé 16 qui est destiné à recevoir une arbre (non représenté) d'une boîte de vitesses et sur lequel sont montés coulissants et solidaires en rotation deux disques de friction d'embrayage.

Un premier disque d'embrayage 22 est interposé entre le volant d'inertie 12 et un plateau intermédiaire 24 qui est monté coulissant par rapport au couvercle 14 et solidaire en rotation dudit couvercle 14.

Un second disque d'embrayage 26 est interposé entre le plateau intermédiaire 24 et un plateau de pression 28 qui est monté coulissant par rapport au couvercle 14 et qui est solidaire en rotation dudit couvercle 14.

L'embrayage 10 comporte aussi un diaphragme d'embrayage 30, qui prend appui contre le couvercle 14 et qui sollicite axialement le plateau de pression 28 en direction du volant d'inertie 12.

De manière connue, comme l'illustre la figure 3, l'embrayage 10 comporte au moins un levier 36, qui s'étend tangentiellement au plateau de pression 28 et qui est articulé à ses extrémités entre ledit plateau de pression 28 et le couvercle 14. Au moins un élément d'appui 38 ou "toucheau", fixé à la périphérie du plateau intermédiaire 24, est en appui sur le levier 36 entre ses articulations 40, 42 pour que la levée du plateau intermédiaire 24 corresponde à au moins une partie de la levée du plateau principal 28 afin de garantir la libération des disques 22, 26 de friction. Pour cette raison, l'élément d'appui 38 est également appelé répartiteur de levée.

De manière connue, comme l'illustrent les figures 4 à 12, l'élément d'appui 38 comporte au moins une première paroi 44 pour sa fixation sur le plateau intermédiaire 24 et une seconde paroi 50 comportant au moins un bossage 52 destiné à entrer en contact sensiblement ponctuel avec le levier 36.

De manière connue, l'embrayage comporte une série d'au moins trois éléments d'appui 38 agencés angulairement de manière régulière autour de la périphérie du plateau intermédiaire.

Conventionnellement un tel élément d'appui 38 est réalisé par un procédé de moulage.

Du fait de la taille réduite dudit élément d'appui 38, le moulage de cet élément 38 se révèle être une opération onéreuse et qui rend de surcroît la maîtrise de ses cotes dimensionnelles relativement incertaine.

L'invention propose de remédier à cet inconvénient en proposant un embrayage 10 comportant un élément d'appui 38 réalisé par emboutissage.

Dans ce but, l'invention propose un embrayage 10 du type décrit précédemment, caractérisé en ce que l'élément d'appui 38 est réalisé par emboutissage d'une tôle d'acier.

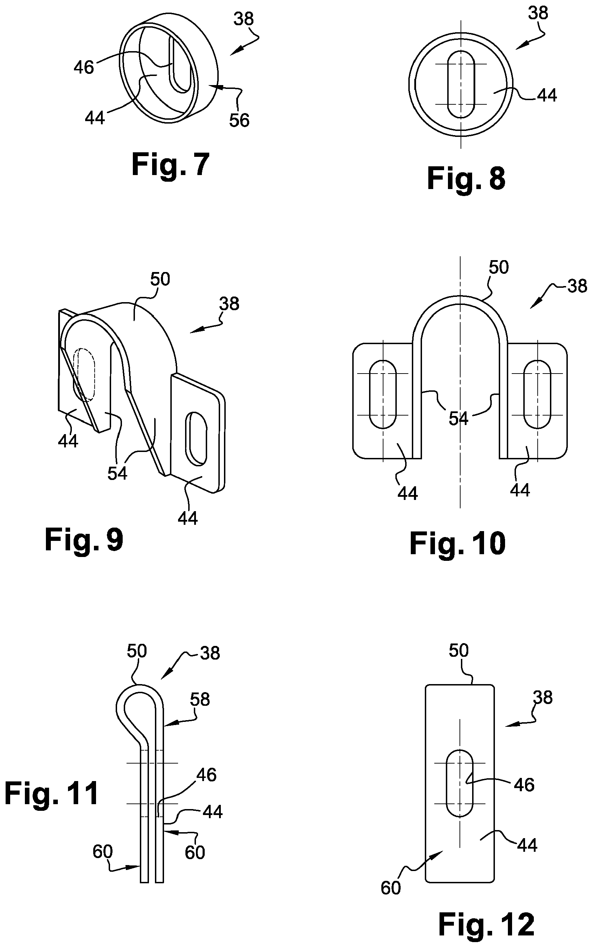

Selon un premier mode de réalisation qui a été représenté aux figures 4 et 5, un deuxième mode de réalisation qui a été représenté à la figure 6 et un troisième mode de réalisation qui a été représenté aux figures 9 et 10, l'élément d'appui présente la forme d'une équerre dont une première branche 44 formant la première paroi comporte un perçage 46 pour la fixation de l'élément d'appui 38 sur le plateau intermédiaire par l'intermédiaire d'une vis radiale 48. L'élément d'appui ou toucheau 38 comporte une seconde branche 50 qui forme la seconde paroi et qui comporte au moins un bossage 52 destiné à entrer en contact sensiblement ponctuel avec le levier 36.

Le bossage présente 52 une section perpendiculaire à la direction générale de la première branche 44.

Dans ces configurations, l'élément d'appui ou toucheau 38 comporte au moins un moyen de rigidification 54 embouti destiné à garantir la position relative des branches 44, 50 de l'équerre.

Selon le premier mode de réalisation qui a été représenté aux figures 4 et 5, l'élément d'appui 38 comporte une unique première branche 44 et une seconde branche 50, et le moyen 54 de rigidification est constitué d'une nervure 54 en forme de gouttière qui s'étend de manière continue sur au moins une partie de la première branche 44 et sur au moins une partie de la seconde branche 50 dans la direction générale desdites branches 44, 50 selon une largeur correspondant à une partie de la largeur des branches 44, 50.

La convexité de cette nervure en forme de gouttière est tournée du côté de l'angle rentrant formé par les deux branches 44, 50.

Avantageusement, la partie de la nervure en forme de gouttière formée dans la seconde branche 50 constitue le bossage 52.

Selon le deuxième mode de réalisation qui a été représenté à la figure 6 et le troisième mode de réalisation qui a été représenté aux figures 9 et 10, la seconde branche 50 est emboutie suivant toute sa largeur selon la forme d'une gouttière de convexité tournée du côté de l'angle rentrant formé par les branches 44, 50.

Selon le deuxième mode de réalisation qui a été représenté à la figure 6, l'élément d'appui comporte une première branche 44 unique formant la première paroi et une seconde branche 50 qui forme la seconde paroi.

Selon le troisième mode de réalisation qui a été représenté aux figures 9 et 10, l'élément d'appui comporte deux premières branches 44 formant la première paroi et une seconde branche 50 agencée entre les deux premières branches, qui forme la seconde paroi.

Dans chacun de ces deuxième et troisième modes, l'élément d'appui 38 comporte des moyens 54 de rigidification comportant de part et d'autre de la seconde branche 50 deux voiles latéraux 54 qui s'étendent entre la seconde branche et chaque première branche 44.

Ainsi, dans le deuxième mode, les voiles latéraux 54 s'étendent entre la seconde branche 50 et les deux côtés de la première branche 44, tandis que dans le troisième mode, les voiles latéraux 54 s'étendent chacun s'étend entre un bord de la seconde branche 50 et un bord correspondant d'une des première branches 44, sensiblement perpendiculairement à chaque branche 44, 50.

Dans chacun de ces deux modes, il sera donc compris que, la gouttière étant emboutie selon toute la largeur de la seconde branche 50, la gouttière de la deuxième branche 50 est agencée dans la continuité des deux voiles opposés 54.

Selon un quatrième mode de réalisation de l'invention qui a été représenté aux figures 7 et 8, le toucheau présente la forme d'un tronçon tubulaire cylindrique 56 comportant une paroi 44 transversale d'extrémité fermant ledit tronçon, ladite paroi transversale comportant un perçage 46 pour constituer la première paroi 44 de fixation sur une face transversale du plateau intermédiaire, et la périphérie du tronçon constituant la seconde paroi 50.

Selon un quatrième mode de réalisation de l'invention qui a été représenté aux figures 11 et 12, l'élément d'appui présente la forme d'une barrette plane 58 repliée sur elle-même en son milieu de manière à comporter deux tronçons plans 60 de barrette parallèles dont au moins un comporte un perçage 46 et constitue la première paroi 44 de fixation sur une périphérie du plateau intermédiaire, et au moins un tronçon incurvé joignant les deux tronçons plans, constituant la seconde paroi 50.

Quelque soit le mode de réalisation envisagé, le perçage 46 est oblong. Ceci permet de régler la position longitudinale du toucheau 38.

Enfin on utilisera de préférence pour la réalisation de l'élément d'appui 38 une tôle d'emboutissage à fort taux d'allongement, ayant de préférence subi un traitement de durcissement superficiel, notamment de carbonitruration ou cémentation après son emboutissage.

L'invention propose une embrayage comportant au moins un élément d'appui 38 robuste et d'un coût de fabrication peu élevé.

## Revendications

1. Embrayage (10) bi-disques de véhicule automobile, comportant un volant d'inertie (12) destiné à être entraîné par un vilebrequin d'un moteur de véhicule automobile, sur lequel est fixé un couvercle (14) d'embrayage à l'intérieur duquel est agencé un moyeu cannelé qui est destiné à recevoir une arbre d'une boîte de vitesses et sur lequel sont montés coulissants et solidaires en rotation deux disques de friction d'embrayage,
un premier disque d'embrayage (22) étant interposé le volant d'inertie (12) et un plateau intermédiaire (24) qui est monté coulissant par rapport au couvercle (14) et solidaire en rotation dudit couvercle (14),
un second disque d'embrayage (26) étant interposé entre le plateau intermédiaire (24) et un plateau de pression (28) qui est monté coulissant par rapport au couvercle (14) et solidaire en rotation dudit couvercle (14),
un diaphragme d'embrayage (30), qui prend appui contre le couvercle (14), sollicitant axialement le plateau de pression (28) en direction du volant d'inertie (12),
un premier ressort (32) de dégagement étant interposé entre le plateau (28) de pression et le couvercle (4) et un second ressort (34) de dégagement étant interposé entre le plateau intermédiaire (24) et le couvercle (14),
au moins un levier (36), qui s'étend tangentiellement au plateau de pression (28), étant articulé à ses extrémités entre ledit plateau de pression (28) et le couvercle (14)
au moins un élément d'appui (38) ou toucheau, fixé à la périphérie du plateau intermédiaire (24), étant en appui sur le levier (36) entre ses articulations (40, 42) pour que la levée du plateau intermédiaire (24) corresponde à au moins une partie de la levée du plateau principal (28) afin de garantir la libération des disques (22, 26) de friction,
ledit élément d'appui ou toucheau (38) comportant au moins une première paroi pour sa fixation sur le plateau intermédiaire (24) et une seconde paroi comportant au moins un bossage (52), destiné à entrer en contact sensiblement ponctuel avec le levier (36),
les première et seconde parois étant venues de matière l'une avec l'autre et l'élément d'appui (38) étant réalisé par emboutissage d'une tôle d'acier, **caractérisé en ce que**
l'élément d'appui (38) présente la forme d'une équerre dont au moins une première branche (44) formant la première paroi comporte un perçage (46) pour sa fixation sur le plateau intermédiaire (24), et dont une seconde branche (50) comportant au moins un bossage (52), de section perpendiculaire à la direction générale de ladite première branche, forme la seconde paroi.

2. Embrayage (10) selon la revendication précédente, **caractérisé en ce que** l'élément d'appui (38) comporte au moins un moyen de rigidification (54) embouti destiné à garantir la position relative des branches (44, 50) de l'équerre.

3. Embrayage (10) selon la revendication précédente, **caractérisé en ce que** l'élément d'appui comporte une unique première branche et une seconde branche et **en ce que** le moyen (54) de rigidification comporte une nervure (54) en forme de gouttière qui s'étend de manière continue sur au moins une partie de la première branche (44) et sur au moins une partie de la seconde branche (50) dans la direction générale desdites branches (44, 50) selon une largeur correspondant à une partie de la largeur des branches (44, 50).

4. Embrayage (10) selon la revendication précédente, **caractérisé en ce que** la convexité de la nervure (54) en forme de gouttière est tournée du coté de l'angle rentrant formé par les deux branches (44, 50), et **en ce que** la partie de la nervure (54)
en forme de gouttière formée dans la seconde branche (50) constitue le bossage (52).

5. Embrayage (10) selon la revendication 1, **caractérisé en ce que** la seconde branche (50) est emboutie suivant toute sa largeur selon la forme d'une gouttière de convexité tournée du coté de l'angle rentrant formé par les première(s) et seconde branches (44, 50).

6. Embrayage (10) selon la revendication précédente, **caractérisé en ce que** l'élément d'appui (38) comporte des moyens (54) de rigidification comportant de part et d'autre de la seconde branche deux voiles latéraux (54) qui s'étendent entre la seconde branche et au moins une première branche.

7. Embrayage selon la revendication précédente, **caractérisé en ce que** l'élément d'appui présente la forme d'une équerre comportant :
- deux premières branches (44) formant la première paroi comportant chacune un perçage (46) pour sa fixation sur le plateau intermédiaire (24),
- une seconde branche (50) agencée entre les deux premières branches, dont le bossage (52) forme la seconde paroi, et **en ce qu'**il comporte deux voiles latéraux (54) dont chacun s'étend entre un bord de la seconde branche et un bord correspondant d'une des première branches, sensiblement perpendiculairement à chaque branche (44, 50).

8. Embrayage selon la revendication 6, **caractérisé en ce que** l'élément d'appui présente la forme d'une équerre comportant une unique première branche (44) formant la première paroi comportant un perçage (46) pour sa fixation sur le plateau intermédiaire (24) et une seconde branche (50) dont le bossage (52) forme la seconde paroi et **en ce que** le moyen de rigidification comporte de part et d'autre de l'équerre deux voiles latéraux qui s'étendent entre les deux branches, à partir des
bords de chaque branche, et sensiblement perpendiculairement au plan de chaque branche.

9. Embrayage (10) selon l'une des revendications 7 ou 8, **caractérisé en ce que** la gouttière de la deuxième branche (50) est agencée dans la continuité des deux voiles opposés (54).

10. Embrayage (10) bi-disques de véhicule automobile, comportant un volant d'inertie (12) destiné à être entraîné par un vilebrequin d'un moteur de véhicule automobile, sur lequel est fixé un couvercle (14) d'embrayage à l'intérieur duquel est agencé un moyeu cannelé qui est destiné à recevoir une arbre d'une boîte de vitesses et sur lequel sont montés coulissants et solidaires en rotation deux disques de friction d'embrayage,
un premier disque d'embrayage (22) étant interposé le volant d'inertie (12) et un plateau intermédiaire (24) qui est monté coulissant par rapport au couvercle (14) et solidaire en rotation dudit couvercle (14),
un second disque d'embrayage (26) étant interposé entre le plateau intermédiaire (24) et un plateau de pression (28) qui est monté coulissant par rapport au couvercle (14) et solidaire en rotation dudit couvercle (14),
un diaphragme d'embrayage (30), qui prend appui contre le couvercle (14), sollicitant axialement le plateau de pression (28) en direction du volant d'inertie (12),
un premier ressort (32) de dégagement étant interposé entre le plateau (28) de pression et le couvercle (4) et un second ressort (34) de dégagement étant interposé entre le plateau intermédiaire (24) et le couvercle (14),
au moins un levier (36), qui s'étend tangentiellement au plateau de pression (28), étant articulé à ses extrémités entre ledit plateau de pression (28) et le couvercle (14)
au moins un élément d'appui (38) ou toucheau, fixé à la périphérie du plateau intermédiaire (24), étant en appui sur le levier (36) entre ses articulations (40, 42) pour que la levée du
plateau intermédiaire (24) corresponde à au moins une partie de la levée du plateau principal (28) afin de garantir la libération des disques (22, 26) de friction,
ledit élément d'appui ou toucheau (38) comportant au moins une première paroi pour sa fixation sur le plateau intermédiaire (24) et une seconde paroi comportant au moins un bossage (52), destiné à entrer en contact sensiblement ponctuel avec le levier (36),
les première et seconde parois étant venues de matière l'une avec l'autre et l'élément d'appui (38) étant réalisé par emboutissage d'une tôle d'acier, **caractérisé en ce que**
l'élément d'appui (38) présente la forme d'un tronçon tubulaire (56) cylindrique comportant une paroi (44) transversale d'extrémité fermant ledit tronçon, ladite paroi transversale comportant un perçage (46) pour constituer la première paroi (44) de fixation sur une face transversale du plateau intermédiaire, et la périphérie du tronçon constituant la seconde paroi (50).

11. Embrayage (10) bi-disques de véhicule automobile, comportant un volant d'inertie (12) destiné à être entraîné par un vilebrequin d'un moteur de véhicule automobile, sur lequel est fixé un couvercle (14) d'embrayage à l'intérieur duquel est agencé un moyeu cannelé qui est destiné à recevoir une arbre d'une boîte de vitesses et sur lequel sont montés coulissants et solidaires en rotation deux disques de friction d'embrayage,
un premier disque d'embrayage (22) étant interposé le volant d'inertie (12) et un plateau intermédiaire (24) qui est monté coulissant par rapport au couvercle (14) et solidaire en rotation dudit couvercle (14),
un second disque d'embrayage (26) étant interposé entre le plateau intermédiaire (24) et un plateau de pression (28) qui est monté coulissant par rapport au couvercle (14) et solidaire en rotation dudit couvercle (14),
un diaphragme d'embrayage (30), qui prend appui contre le couvercle (14), sollicitant axialement le plateau de pression (28) en direction du volant d'inertie (12),
un premier ressort (32) de dégagement étant interposé entre le plateau (28) de pression et le couvercle (4) et un second ressort (34) de dégagement étant interposé entre le plateau intermédiaire (24) et le couvercle (14),
au moins un levier (36), qui s'étend tangentiellement au plateau de pression (28), étant articulé à ses extrémités entre ledit plateau de pression (28) et le couvercle (14)
au moins un élément d'appui (38) ou toucheau, fixé à la périphérie du plateau intermédiaire (24), étant en appui sur le levier (36) entre ses articulations (40, 42) pour que la levée du plateau intermédiaire (24) corresponde à au moins une partie de la levée du plateau principal (28) afin de garantir la libération des disques (22, 26) de friction,
ledit élément d'appui ou toucheau (38) comportant au moins une première paroi pour sa fixation sur le plateau intermédiaire (24) et une seconde paroi comportant au moins un bossage (52), destiné à entrer en contact sensiblement ponctuel avec le levier (36),
les première et seconde parois étant venues de matière l'une avec l'autre et l'élément d'appui (38) étant réalisé par emboutissage d'une tôle d'acier, **caractérisé en ce que**
l'élément d'appui (38) présente la forme d'une barrette plane (58) repliée sur elle-même en son milieu de manière à comporter deux tronçons plans (60) de barrette parallèles dont au moins un comporte un perçage (46) et constitue la première paroi (44) de fixation sur une périphérie du plateau intermédiaire, et au moins un tronçon incurvé joignant les deux tronçons plans, constituant la seconde paroi (50).

12. Embrayage (10) selon l'une quelconque des revendications précédentes, **caractérisé en ce que** chaque perçage (46) est oblong.

13. Embrayage (10) selon l'une quelconque des revendications précédentes, **caractérisé en ce que** la tôle utilisée est une tôle d'emboutissage à fort taux d'allongement.

14. Embrayage (10) selon l'une quelconque des revendications précédentes, **caractérisé en ce que** la tôle de l'élément d'appui (38) subit un traitement de durcissement superficiel, notamment de carbonitruration ou cémentation après son emboutissage.

## Patentansprüche

1. Kraftfahrzeug-Doppelscheibenkupplung (10), die ein Schwungrad (12) umfasst, das dazu bestimmt ist, von einer Kurbelwelle eines Kraftfahrzeugmotors angetrieben zu werden, auf dem ein Kupplungsdeckel (14) befestigt ist, in dessen Innerem eine Keilnabe eingerichtet ist, die dazu bestimmt ist, eine Welle eines Schaltgetriebes aufzunehmen, und auf der gleitend und fest in Drehung verbunden zwei Kupplungsreibscheiben montiert sind,
wobei eine erste Kupplungsscheibe (22) zwischen dem Schwungrad (12) und einer Zwischenplatte (24), die in Bezug auf den Deckel (14) gleitend montiert und fest in Drehung mit dem Deckel (14) verbunden ist, eingefügt ist,
wobei eine zweite Kupplungsscheibe (26) zwischen der Zwischenplatte (24) und einer Druckplatte (28), die gleitend in Bezug auf den Deckel (14) montiert und fest in Drehung mit dem Deckel (14) verbunden montiert ist, eingefügt ist,
wobei eine Kupplungsmembran (30), die gegen den Deckel (14) anliegt, die Druckplatte (28) axial in Richtung des Schwungrads (12) beansprucht,
wobei eine erste Freigabefeder (32) zwischen der Druckplatte (28) und dem Deckel (4) eingefügt ist, und eine zweite Freigabefeder (34) zwischen der Zwischenplatte (24) und dem Deckel (14) eingefügt ist,
wobei mindestens ein Hebel (36), der sich tangential zu der Druckplatte (28) erstreckt, an seinen Enden zwischen der Druckplatte (28) und dem Deckel (14) angelenkt ist,
wobei mindestens ein Auflageelement (38) oder Gleitstück, das an dem Umfang der Zwischenplatte (24) befestigt ist, auf dem Hebel (36) zwischen seinen Anlenkungen (40, 42) in Auflage ist, damit der Hub der Zwischenplatte (24) mindestens einem Teil des Hubs der Hauptplatte (28) entspricht, um das Freigeben der Reibscheiben (22, 26) zu garantieren,
wobei das Auflageelement oder Gleitstück (38) mindestens eine erste Wand für seine Befestigung auf der Zwischenplatte (24) und eine zweite Wand, die mindestens einen Höcker (52) umfasst, der dazu bestimmt ist in im Wesentlichen punktweisen Kontakt mit dem Hebel (36) zu treten, umfasst,
wobei die erste und die zweite Wand miteinander aus einem Stück hergestellt sind, und das Auflageelement (38) durch Stanzen eines Stahlblechs hergestellt ist, **dadurch gekennzeichnet, dass** das Auflageelement (38) die Form eines Winkels aufweist, von dem mindestens ein erster Schenkel (44), der die erste Wand bildet, eine Bohrung (46) für seine Befestigung auf der Zwischenplatte (24) umfasst, und ein zweiter Schenkel (50), der mindestens einen Höcker (52) mit Querschnitt senkrecht zu der allgemeinen Richtung des ersten Schenkels umfasst, die zweite Wand bildet.

2. Kupplung (10) nach dem vorhergehenden Anspruch, **dadurch gekennzeichnet, dass** das Auflageelement (38) mindestens ein gestanztes Versteifungsmittel (54) umfasst, das dazu bestimmt ist, die relative Position der Schenkel (44, 50) des Winkels zu garantieren.

3. Kupplung (10) nach dem vorhergehenden Anspruch, **dadurch gekennzeichnet, dass** das Auflageelement einen einzigen ersten Schenkel und einen zweiten Schenkel umfasst, und dass das Versteifungsmittel (54) eine Rippe (54) in Rinnenform umfasst, die sich durchgehend auf mindestens einem Teil des ersten Schenkels (44) und auf mindestens einem Teil des zweiten Schenkels (50) in die allgemeine Richtung der Schenkel (44, 50) entlang einer Breite erstreckt, die einem Teil der Breite der Schenkel (44, 50) entspricht.

4. Kupplung (10) nach dem vorhergehenden Anspruch, **dadurch gekennzeichnet, dass** die Wölbung der Rippe (54) in Rinnenform zu der Seite des einspringenden Winkels, der von den zwei Schenkeln (44, 50) gebildet wird, gerichtet ist, und dass der Teil der Rippe (54) in Rinnenform, der in dem zweiten Schenkel (50) gebildet ist, den Höcker (52) bildet.

5. Kupplung (10) nach Anspruch 1, **dadurch gekennzeichnet, dass** der zweite Schenkel (50) entlang seiner gesamten Breite gemäß der Form einer Rinne mit Wölbung, die zu der Seite des einspringenden Winkels gerichtet ist, der von dem (den) ersten und zweiten Schenkel(n) (44, 50) gebildet wird, gestanzt ist.

6. Kupplung (10) nach dem vorhergehenden Anspruch, **dadurch gekennzeichnet, dass** das Auflageelement (38) Versteifungsmittel (54) umfasst, die zu beiden Seiten des zweiten Schenkels zwei seitliche Abdeckungen (54) umfassen, die sich zwischen dem zweiten Schenkel und mindestens einem ersten Schenkel erstrecken.

7. Kupplung nach dem vorhergehenden Anspruch, **dadurch gekennzeichnet, dass** das Auflageelement die Form eines Winkels aufweist, umfassend:
- zwei erste Schenkel (44), die die erste Wand bilden, die jeweils eine Bohrung (46) für ihre Befestigung auf der Zwischenplatte (24) umfassen,
- einen zweiten Schenkel (50), der zwischen den zwei ersten Schenkeln eingerichtet ist, dessen Höcker (52) die zweite Wand bildet,
und dass sie zwei seitliche Abdeckungen (54) umfasst, die sich jeweils zwischen einem Rand des zweiten Schenkels und einem entsprechenden Rand eines der ersten Schenkel im Wesentlichen senkrecht zu jedem Schenkel (44, 50) erstrecken.

8. Kupplung nach Anspruch 6, **dadurch gekennzeichnet, dass** das Auflageelement die Form eines Winkels aufweist, der einen einzigen ersten Schenkel (44) umfasst, der die erste Wand bildet, die eine Bohrung (46) für ihre Befestigung auf der Zwischenplatte (24) umfasst, und einen zweiten Schenkel (50), dessen Höcker (52) die zweite Wand bildet, und dass das Versteifungsmittel zu beiden Seiten des Winkels zwei seitliche Abdeckungen umfasst, die sich zwischen den zwei Schenkeln ausgehend von den Rändern jedes Schenkels und im Wesentlichen senkrecht zu der Ebene jedes Schenkels erstrecken.

9. Kupplung (10) nach einem der Ansprüche 7 oder 8, **dadurch gekennzeichnet, dass** die Rinne des zweiten Schenkels (50) in der Fortsetzung der zwei entgegengesetzten Abdeckungen (54) eingerichtet ist.

10. Kraftfahrzeug-Doppelscheibenkupplung (10), die ein Schwungrad (12) umfasst, das dazu bestimmt ist, von einer Kurbelwelle eines Kraftfahrzeugmotors angetrieben zu werden, auf dem ein Kupplungsdeckel (14) befestigt ist, in dessen Innerem eine Keilnabe eingerichtet ist, die dazu bestimmt ist, eine Welle eines Schaltgetriebes aufzunehmen, und auf dem gleitend und fest in Drehung verbunden zwei Kupplungsreibscheiben montiert sind,
wobei eine erste Kupplungsscheibe (22) zwischen dem Schwungrad (12) und der Zwischenplatte (24), die gleitend in Bezug auf den Deckel (14) montiert und in Drehung fest mit dem Deckel (14) verbunden ist, eingefügt ist,
wobei eine zweite Kupplungsscheibe (26) zwischen der Zwischenplatte (24) und einer Druckplatte (28), die gleitend in Bezug auf den Deckel (14) montiert und in Drehung fest mit dem Deckel (14) verbunden ist, eingefügt ist,
wobei eine Kupplungsmembran (30), die gegen den Deckel (14) anliegt, die Druckplatte (28) axial in Richtung des Schwungrads (12) beansprucht,
wobei eine erste Freigabefeder (32) zwischen der Druckplatte (28) und dem Deckel (4) eingefügt ist, und eine zweite Freigabefeder (34) zwischen der Zwischenplatte (24) und dem Deckel (14) eingefügt ist,
wobei mindestens ein Hebel (36), der sich tangential zu der Druckplatte (28) erstreckt, an seinen Enden zwischen der Druckplatte (28) und dem Deckel (14) angelenkt ist,
wobei mindestens ein Auflageelement (38) oder Gleitstück, das an dem Umfang der Zwischenplatte (24) befestigt ist, auf dem Hebel (36) zwischen seinen Anlenkungen (40, 42) in Auflage ist, damit der Hub der Zwischenplatte (24) mindestens einem Teil des Hubs der Hauptplatte (28) entspricht, um die Freigabe der Reibscheiben (22, 26) zu garantieren,
wobei das Auflageelement oder Gleitstück (38) mindestens eine erste Wand für seine Befestigung auf der Zwischenplatte (24) und eine zweite Wand, die mindestens einen Höcker (52) umfasst, der dazu bestimmt ist, in im Wesentlichen punktweisen Kontakt mit dem Hebel (36) zu treten, umfasst,
wobei die erste und die zweite Wand miteinander aus einem Stück hergestellt sind, und das Auflageelement (38) durch Stanzen eines Stahlblechs hergestellt ist, **dadurch gekennzeichnet, dass** das Auflageelement (38) die Form eines zylindrischen röhrenförmigen Abschnitts (56) hat, der eine Endquerwand (44) umfasst, die den Abschnitt schließt, wobei die Endquerwand eine Bohrung (46) umfasst, um die erste Befestigungswand (44) auf einer Querseite der Zwischenplatte zu bilden, und der Umfang des Abschnitts die zweite Wand (50) bildet.

11. Kraftfahrzeug-Doppelscheibenkupplung (10), die ein Schwungrad (12) umfasst, das dazu bestimmt ist, von einer Kurbelwelle eines Kraftfahrzeugmotors angetrieben zu werden, auf dem ein Kupplungsdeckel (14) befestigt ist, in dessen Innerem eine Keilnabe eingerichtet ist, die dazu bestimmt ist, eine Welle eines Schaltgetriebes aufzunehmen, und auf dem gleitend und fest in Drehung verbunden zwei Kupplungsreibscheiben montiert sind,
wobei eine erste Kupplungsscheibe (22) dem Schwungrad (12) und einer Zwischenplatte (24), die gleitend in Bezug auf den Deckel (14) montiert und in Drehung fest mit dem Deckel (14) verbunden ist, eingefügt ist,
wobei eine zweite Kupplungsscheibe (26) zwischen der Zwischenplatte (24) und einer Druckplatte (28), die gleitend in Bezug auf den Deckel (14) und fest in Drehung mit dem Deckel (14) verbunden montiert ist, eingefügt ist,
wobei eine Kupplungsmembran (30), die gegen den Deckel (14) anliegt, die Druckplatte (28) axial in Richtung des Schwungrads (12) beansprucht,
wobei eine erste Freigabefeder (32) zwischen der Druckplatte (28) und dem Deckel (4) eingefügt ist, und eine zweite Freigabefeder (34) zwischen der Zwischenplatte (24) und dem Deckel (14) eingefügt ist,
wobei mindestens ein Hebel (36), der sich tangential zu der Druckplatte (28) erstreckt, an seinen Enden zwischen der Druckplatte (28) und dem Deckel (14) angelenkt ist,
wobei mindestens ein Auflageelement (38) oder Gleitstück, das an dem Umfang der Zwischenplatte (24) befestigt ist, auf dem Hebel (36) zwischen seinen Anlenkungen (40, 42) in Auflage ist, damit der Hub der Zwischenplatte (24) mindestens einem Teil des Hubs der Hauptplatte (28) entspricht, um das Freigeben der Reibscheiben (22, 26) zu garantieren,
wobei das Auflageelement oder Gleitstück (38) mindestens eine erste Wand für seine Befestigung auf der Zwischenplatte (24) und eine zweite Wand, die mindestens einen Höcker (52) umfasst, der dazu bestimmt ist in im Wesentlichen punktweisen Kontakt mit dem Hebel (36) zu treten, umfasst,
wobei die erste und die zweite Wand miteinander aus einem Stück hergestellt sind, und das Auflageelement (38) durch Stanzen eines Stahlblechs hergestellt ist, **dadurch gekennzeichnet, dass** das Auflageelement (38) die Form einer flachen Leiste (58) aufweist, die auf sich selbst in ihrer Mitte derart zurückgefaltet ist, dass sie zwei parallele flache Leistenabschnitte (60) umfasst, von welchen mindestens einer eine Bohrung (46) umfasst und die erste Befestigungswand (44) auf einem Umfang der Zwischenplatte bildet, und mindestens einen gebogenen Abschnitt, der die zwei flachen Abschnitte verbindet, die die zweite Wand (50) bilden.

12. Kupplung (10) nach einem der vorhergehenden Ansprüche, **dadurch gekennzeichnet, dass** jede Bohrung (46) länglich ist.

13. Kupplung (10) nach einem der vorhergehenden Ansprüche, **dadurch gekennzeichnet, dass** das verwendete Blech ein Stanzblech mit starkem Reckgrad ist.

14. Kupplung (10) nach einem der vorhergehenden Ansprüche, **dadurch gekennzeichnet, dass** das Blech des Auflageelements (38) einer Oberflächenhärtungsbehandlung, insbesondere Karbonitrieren oder Zementierung, nach seinem Stanzen unterzogen wird.

## Claims

1. Dual-disc clutch (10) for a motor vehicle, comprising a flywheel (12) intended to be driven by a crankshaft of a motor vehicle engine, to which is fixed a clutch cover (14) inside which is arranged a splined hub which is intended to take a gearbox shaft and on which two clutch friction discs are mounted so that they can slide but which rotate as one therewith,
a first clutch disc (22) being interposed between the flywheel (12) and an intermediate plate (24) which is mounted such that it can slide with respect to the cover (14) but not rotate with respect to the said cover (14),
a second clutch disc (26) being interposed between the intermediate plate (24) and a pressure plate (28) which is mounted with the ability to slide with respect to the cover (14) but not rotate with respect to the said cover (14),
a clutch diaphragm (30) which bears against the cover (14) axially urging the pressure plate (28) towards the flywheel (12)
a first disengagement spring (32) being interposed between the pressure plate (28) and the cover (4) and a second disengagement spring (34) being interposed between the intermediate plate (24) and the cover (14),
at least one lever (36), which extends tangentially to the pressure plate (28), being articulated at its ends between the said pressure plate (28) and the cover (14) at least one bearing element (28) or feeler, fixed to the periphery of the intermediate plate (24), bearing against the lever (36) between its aritculations (40, 42) so that the lift of the intermediate plate (24) corresponds to at least part of the lift of the main plate (28) so as to ensure release of the friction discs (22, 26),
the said bearing element or feeler (38) comprising at least a first wall for fixing it to the intermediate plate (24) and a second wall comprising at least one boss (52) intended to come into substantially point contact with the lever (36), the first and second walls being formed in one piece with one another and the bearing element (38) being produced by stamping a steel sheet, **characterized in that** the bearing element (38) has the shape of an angle bracket of which at least one first leg (44), that forms the first wall comprises a piercing (46) for fixing it to the intermediate plate (24) and of which a second leg (50), which comprises at least one boss (52), of cross section perpendicular to the overall direction of the said first leg, forms the second wall.

2. Clutch (10) according to the preceding claim, **characterized in that** the bearing element (38) comprises at least one pressed stiffening means (54) intended to guarantee the relative position of the legs (44, 50) of the angle bracket.

3. clutch (10) according to the preceding claim, **characterized in that** the bearing element comprises a single first leg and a second leg and **in that** the stiffening means (54) comprises a gutter-shaped rib (54) extending continuously along at least part of the first leg (44) and along at least part of the second leg (50) in the overall direction of the said legs (44, 50) over a width corresponding to part of the width of the legs (44, 50).

4. Clutch (10) according to the preceding claim, **characterized in that** the convexity of the gutter-shaped rib (54) faces towards the side of the re-entrant angle formed by the two legs (44, 50), and **in that** the part of the gutter-shaped rib (54) that is formed in the second leg (50) constitutes the boss (52).

5. Clutch (10) according to Claim 1, **characterized in that** the second leg (50) is pressed over its entire width into the shape of a gutter with the convexity facing towards the side of the re-entrant angle formed by the first and second legs (44, 50).

6. Clutch (10) according to the preceding claim, **characterized in that** the bearing element (38) comprises stiffening means (54) comprising, on each side of the second leg, two lateral flanges (54) which extend between the second leg and at least one first leg.

7. Clutch according to the preceding claim, **characterized in that** the bearing element has the form of an angle bracket comprising:
- two first legs (44) forming the first wall and each comprising a piercing (46) for fixing it to the intermediate plate (24),
- a second leg (50) arranged between the two first legs, the boss (52) of which forms the second wall,
and **in that** it comprises two lateral flanges (54) each of which extends between one edge of the second leg and a corresponding edge of one of the first legs, which are substantially perpendicular to each leg (44, 50).

8. Clutch according to Claim 6, **characterized in that** the bearing element takes the form of an angle bracket comprising a single first leg (44) forming the first wall comprising a piercing (46) for fixing it to the intermediate plate (24) and a second leg (50) the boss (52) of which forms the second wall and **in that** the stiffening means comprises on each side of the angle bracket two lateral flanges which extend between the two legs, starting from the edges of each leg, and substantially perpendicular to the plane of each leg.

9. Clutch (10) according to one of Claims 7 and 8, **characterized in that** the gutter of the second leg (50) is arranged in continuity with the two opposite flanges (54).

10. Dual-disc clutch (10) for a motor vehicle, comprising a flywheel (12) intended to be driven by a crankshaft of a motor vehicle engine, to which is fixed a clutch cover (14) inside which is arranged a splined hub which is intended to take a gearbox shaft and on which two clutch friction discs are mounted so that they can slide but which rotate as one therewith,
a first clutch disc (22) being interposed between the flywheel (12) and an intermediate plate (24) which is mounted such that it can slide with respect to the cover (14) but not rotate with respect to the said cover (14),
a second clutch disc (26) being interposed between the intermediate plate (24) and a pressure plate (28) which is mounted with the ability to slide with respect to the cover (14) but not rotate with respect to the said cover (14),
a clutch diaphragm (10) which bears against the cover (14) axially urging the pressure plate (28) towards the flywheel (12),
a first disengagement spring (32) being interposed between the pressure plate (28) and the cover (4) and a second disengagement spring (34) being interposed between the intermediate plate (24) and the cover (14), at least one lever (36), which extends tangentially to the pressure plate (28), being articulated at its ends between the said pressure plate (28) and the cover (14),
at least one bearing element (28) or feeler, fixed to the periphery of the intermediate plate (24), bearing against the lever (36) between its articulations (40, 42) so that the lift of the intermediate plate (24) corresponds to at least part of the lift of the main plate (28) so as to ensure release of the friction discs (22, 26),
the said bearing element or feeler (38) comprising at least a first wall for fixing it to the intermediate plate (24) and a second wall comprising at least one boss (52) intended to come into substantially point contact with the lever (36), the first and second walls being formed in one piece with one another and the bearing element (38) being produced by stamping a steel sheet, **characterized in that** the bearing element (38) takes the form of a cylindrical tubular portion (56) comprising an end transverse wall (44) closing the said portion, the said transverse wall comprising a piercing (46) to constitute the first wall (44) for fixing to the transverse face of the intermediate plate, and the periphery of the portion constituting the second wall (50).

11. Dual-disc clutch (10) for a motor vehicle, comprising a flywheel (12) intended to be driven by a crankshaft of a motor vehicle engine, to which is fixed a clutch cover (14) inside which is arranged a splined hub which is intended to take a gearbox shaft and on which two clutch friction discs are mounted so that they can slide but which rotate as one therewith,
a first clutch disc (22) being interposed the flywheel (12) and an intermediate plate (24) which is mounted such that it can slide with respect to the cover (14) but not rotate with respect to the said cover (14),
a second clutch disc (26) being interposed between the intermediate plate (24) and a pressure plate (28) which is mounted with the ability to slide with respect to the cover (14) but not rotate with respect to the said cover (14),
a clutch diaphragm (30) which bears against the cover (14) axially urging the pressure plate (28) towards the flywheel (12),
a first disengagement spring (32) being interposed between the pressure plate (28) and the cover (4) and a second disengagement spring (34) being interposed between the intermediate plate (24) and the cover (14), at least one lever (36), which extends tangentially to the pressure plate (28), being articulated at its ends between the said pressure plate (28) and the cover (14) at least one bearing element (28) or feeler, fixed to the periphery of the intermediate plate (24), bearing against the lever (36) between its articulations (40, 42) so that the lift of the intermediate plate (24) corresponds to at least part of the lift of the main plate (28) so as to ensure release of the friction discs (22, 26),
the said bearing element or feeler (38) comprising at least a first wall for fixing it to the intermediate plate (24) and a second wall comprising at least one boss (52) intended to come into substantially point contact with the lever (36), the first and second walls being formed in one piece with one another and the bearing element (38) being produced by stamping a steel sheet, **characterized in that** the bearing element (38) takes the form of a flat strip (58) being folded on itself in the middle so as to comprise two parallel flat strip portions (60) at least one of which has a piercing (46) and constitutes the first wall (44) for fixing to a periphery of the intermediate plate, and at least one curved portion joining the two flat portions and constituting the second wall (50).

12. Clutch (10) according to any one of the preceding claims, **characterized in that** each piercing (46) is oblong.

13. Clutch (10) according to any one of the preceding claims, **characterized in that** the sheet metal used is a high strain deep-drawing sheet.

14. Clutch (10) according to any one of the preceding claims, **characterized in that** the sheet of metal of the bearing element (38) undergoes a surface hardening treatment, notably a carbonitriding or case-hardening treatment after it has been pressed.
